# FASCICULE DE BREVET EUROPEEN

(11) **EP 1 824 715 B1**
(45) Date de publication et mention de la délivrance du brevet: **04.09.2013**
(21) Numéro de dépôt: 05819386.3
(22) Date de dépôt: 13.12.2005
(51) Int. Cl.: B60S 1/34

(54) **AGENCEMENT DE LIAISON DEBRAYABLE D'UN BRAS D'ESSUIE GLACE SUR UN ARBRE MOTEUR**
ENTKOPPELBARE VERBINDUNGSVORRICHTUNG EINES WISCHARMS AUF EINER MOTORWELLE
ARRANGEMENT FOR SELF-RELEASING CONNECTION OF A WINDSCREEN WIPER ARM ON A DRIVING SHAFT

(30) Priorité: 17.12.2004 FR 0413475
(43) Date de publication de la demande: 29.08.2007
(73) Titulaire: VALEO SYSTEMES D'ESSUYAGE, 78321 La Verrière (FR)
(72) Inventeur: LAURENS, Romain, F-63000 Clermont-Ferrand (FR); BRAZI, Karim, F-63500 Issoire (FR)
(86) Numéro de dépôt international: PCT/EP2005/013334
(87) Numéro de publication internationale: WO 2006/063781

(56) Documents cités:
- GB-A- 743 720
- US-A- 2 826 903
- US-A- 4 610 340
- US-A- 6 026 536

## Description

L'invention concerne un agencement débrayable de liaison d'un bras d'essuie glace sur un arbre moteur.

Un bras d'essuie glace de véhicule automobile est classiquement connecté à un arbre d'un moteur d'entraînement en pivotement sur la plage d'essuyage de la glace, l'axe longitudinal du bras étant sensiblement perpendiculaire à l'axe de rotation de l'arbre moteur. Par ailleurs, afin de pouvoir accéder au balai porté par le bras, ce bras peut être pivoté dans un plan sensiblement perpendiculaire à la glace, essentiellement pour pouvoir vérifier ou changer le balai. L'essuie glace peut alors comporter une tête de bras montée sur l'arbre moteur et sur laquelle est articulé le bras en soi afin de pouvoir être pivoté dans ledit plan sensiblement perpendiculaire à la glace.

Dans certaines conditions, par exemple lors d'un lavage du véhicule au moyen de rouleaux, de présence de gel ou de neige sur la glace, le bras peut être soumis à un couple important tendant à le faire pivoter autour de l'axe de rotation de l'arbre moteur, ce couple étant supérieur au couple exercé par l'arbre moteur. Il en résulte que le bras ou la tête de bras peuvent être endommagés et même cassés.

Afin de résoudre ce problème, le brevet US 6 026 536 propose un agencement de liaison débrayable d'un bras d'essuie glace sur un arbre moteur.

Selon cet agencement antérieur, l'extrémité du bras est équipée d'un dispositif élastique solidaire du bras et constitué d'une pluralité de branches élastiques parallèles à l'axe de rotation de l'arbre moteur et venant en prise avec des parties de butée périphériques portées par l'arbre moteur et réparties autour de ce dernier. Ces branches sont entourées d'une bague ouverte. Lors de l'application d'un certain couple de pivotement sur le bras, l'arbre moteur étant immobile, la bague s'ouvre et libère la pluralité de branches qui s'expansent et sortent de leur position de butée, permettant le pivotement du bras d'essuie glace.

Un tel agencement connu pose les problèmes techniques suivants.

Il nécessite la réalisation d'un arbre moteur de forme spécifique avec une partie usinée avec lesdites parties de butée périphériques. Par ailleurs, sur le bras, doit être solidarisée la pluralité de branches élastiques. De plus, à son montage, cet agencement comprend ladite bague, qui est une pièce séparée susceptible d'être mal montée ou même oubliée. Un tel agencement de liaison débrayable est donc de fabrication et de montage relativement complexes.

Une fois l'agencement débrayé, le bras peut tourner autour de l'arbre moteur jusqu'à la fin de l'application du couple et se bloque alors dans cette position finale. Il en résulte qu'une manipulation du bras est nécessaire pour remettre le bras en position initiale où il est susceptible de fonctionner correctement. Cette manipulation n'est pas aisée, plusieurs positions relatives bloquées étant possibles compte tenu de la pluralité de branches et de parties de butée.

L'invention résout ces problèmes techniques et, pour ce faire, propose un agencement de liaison débrayable selon la revendication 1.

Selon l'invention, ledit dispositif déformable comprend au moins une lame élastique dont au moins une extrémité est solidaire du bras et dont une partie de blocage est emboîtée dans une partie de butée solidaire de l'arbre moteur.

De préférence, ladite partie de butée est agencée sur un manchon solidaire de l'arbre moteur.

Selon un mode de réalisation particulier, ladite lame élastique est solidaire du bras par ses deux extrémités et ladite partie de blocage est une partie pliée en forme de Vé.

Avantageusement, ladite lame élastique est une lame ressort métallique.

L'invention concerne également un essuie glace équipé d'un agencement comme précisé ci-dessus, caractérisé en ce que ledit dispositif déformable est logé dans une tête de bras, montée sur l'arbre moteur et sur laquelle est articulé le bras en soi afin de pouvoir être pivoté dans un plan sensiblement perpendiculaire à la glace.

L'invention est décrite ci-après plus en détail à l'aide de figures ne représentant mode de réalisation préféré de l'invention.
La figure 1 est une vue d'une glace arrière de véhicule équipé d'un essuie glace conforme à l'invention.
La figure 2 est une vue en perspective d'une tête de bras d'essuie glace équipé d'un agencement débrayable de liaison conforme à l'invention.
La figure 3 est une vue schématique en coupe longitudinale d'une telle d'une tête de bras.

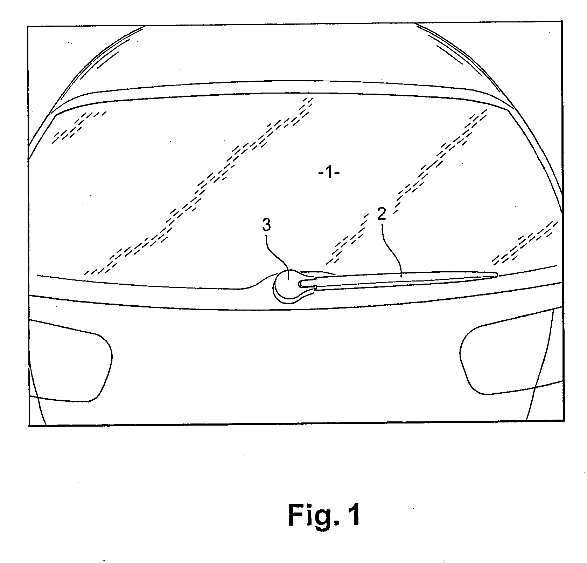

La figure 1 représente une glace arrière 1 de véhicule automobile équipée d'un essuie glace comportant un bras 2, portant un balai, et une tête de bras 3, montée sur un arbre moteur d'entraînement et sur laquelle est articulé le bras 2 en soi afin de pouvoir être pivoté dans un plan sensiblement perpendiculaire à la glace 1.

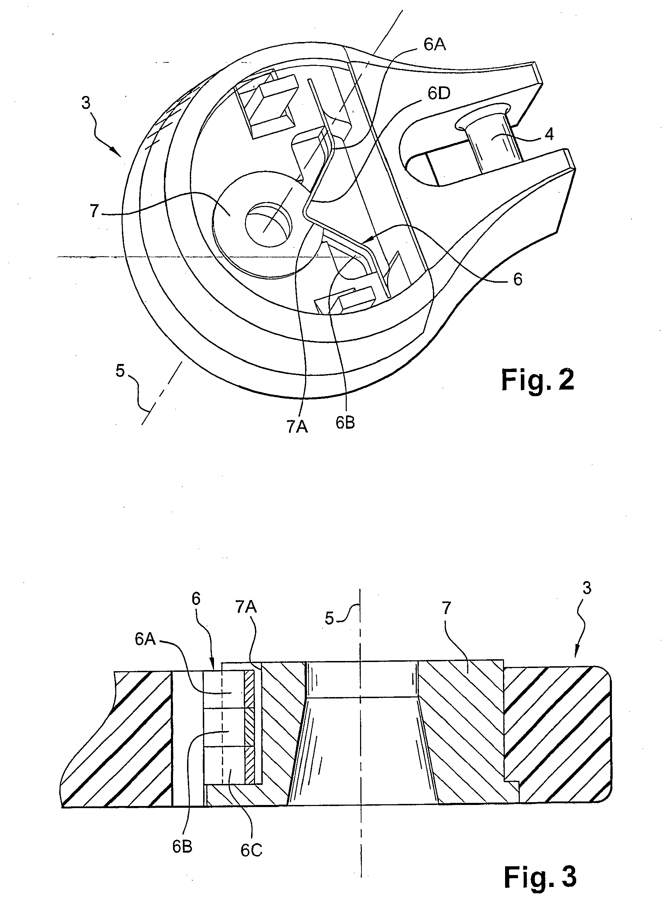

La figure 2 représente en perspective la tête de bras 3 en position de fonctionnement normal.

Cette tête de bras 3 comporte un axe 4 sur laquelle est articulé le bras en soi afin de pouvoir être pivoté dans un plan sensiblement perpendiculaire à la glace.

Un agencement débrayable de liaison du bras d'essuie glace sur l'arbre moteur entraîné en rotation autour de son axe longitudinal 5 est logé dans cette tête de bras. Cet agencement comporte un dispositif 6 solidaire du bras et assurant la liaison du bras et de l'arbre moteur en position de fonctionnement normal de l'essuie glace. Ce dispositif est déformable sous l'effet d'un couple appliqué au bras et tendant à le faire pivoter autour de l'axe de rotation 5 de l'arbre moteur, lorsque cet arbre est immobile, et repositionnable en position de fonctionnement normal par positionnement relatif bloqué unique du bras et de l'arbre moteur.

Le dispositif déformable 6 comprend deux lames élastiques 6A, 6B, superposées constituées chacune d'une lame ressort métallique. Ces lames sont solidaires de la tête de bras par leurs deux extrémités et elles comprennent une partie de blocage 6C constituée d'une partie pliée en forme de Vé. Cette partie de blocage est emboîtée dans une partie de butée 7A constituée d'une cavité de forme correspondante en Vé et agencée sur un manchon 7 solidaire de l'arbre moteur et monté glissant sur la tête de bras.

La tête de bras 3 illustrée sur la figure 2 est avantageusement recouverte d'un couvercle protégeant l'agencement de façon esthétique.

Sur la figure 3 est représenté un agencement analogue en coupe.

Le dispositif déformable 6 comprend ici trois lames élastiques 6A, 6B, 6C, superposées constituées chacune d'une lame ressort métallique. Leur partie de blocage en Vé est emboîtée dans la partie de butée 7A constituée d'une cavité de forme correspondante en Vé et agencée sur le manchon 7 solidaire de l'arbre moteur et monté glissant sur la tête de bras 3.

L'invention est décrite ci-dessus selon un mode de réalisation préféré. D'autres modes de réalisation non spécifiquement décrits entrent dans le cadre de l'invention.

Il va de soi que l'application s'applique à toute glace de véhicule automobile, avant ou arrière.

L'invention s'applique également à un bras d'essuie glace dépourvu de tête de bras. Dans ce cas, l'agencement de liaison débrayable est monté directement sur l'extrémité du bras.

Dans le mode de réalisation décrit spécifiquement, le nombre de lames élastiques est choisi en fonction de la valeur minimale du couple de débrayage et de la résistance desdites lames.

Il peut être utilisé un élément déformable en matière plastique, par exemple un clip ou une lame.

Un système de rondelle Belleville, de crabots, d'aimants ou de bille à ressort peuvent être utilisés en tant que dispositif déformable.

L'agencement de liaison débrayable peut être agencé à un autre endroit de liaison que l'extrémité de l'arbre moteur, par exemple sur la timonerie d'entraînement.

## Revendications

1. Agencement de liaison débrayable d'un bras d'essuie glace sur un arbre moteur entraîné en rotation autour de son axe longitudinal (5), comportant un dispositif solidaire du bras et assurant la liaison du bras (3, 4) et de l'arbre moteur en position de fonctionnement normal de l'essuie glace, ce dispositif étant déformable sous l'effet d'un couple appliqué au bras supérieur à celui exercé par ledit arbre, et repositionnable en position de fonctionnement normal par positionnement relatif bloqué du bras et de l'arbre moteur, dans lequel ledit positionnement relatif bloqué du bras (1, 3) et de l'arbre moteur est unique, **caractérisé en ce que** ledit dispositif déformable comprend au moins une lame élastique (6A, 6B, 6C) dont au moins une extrémité est solidaire du bras (2, 3) et dont une partie de blocage (6D) est emboîtée dans une partie de butée (7A) solidaire de l'arbre moteur.

2. Agencement selon la revendication précédente, **caractérisé en ce que** ladite partie de butée (7A) est agencée sur un manchon (7) solidaire de l'arbre moteur.

3. Agencement selon la revendication 1 ou 2, **caractérisé en ce que** ladite lame élastique (6A, 6B, 6C) est solidaire du bras par ses deux extrémités et ladite partie de blocage (6D) est une partie pliée en forme de Vé.

4. Agencement selon l'une des revendications 1 à 3, **caractérisé en ce que** ladite lame élastique est une lame ressort métallique.

5. Essuie glace équipé d'un agencement selon l'une des revendications précédentes, **caractérisé en ce que** ledit dispositif déformable est logé dans une tête de bras (3), montée sur l'arbre moteur et sur laquelle est articulé le bras en soi (2), afin de pouvoir être pivoté dans un plan sensiblement perpendiculaire à la glace.

## Patentansprüche

1. Entkoppelbare Anordnung zur Verbindung eines Wischerams auf einer Antriebswelle, die um ihre Längsachse (5) drehangetrieben wird; die eine Vorrichtung umfasst, die mit dem Arm fest verbunden ist und die Verbindung des Arms (3, 4) und der Antriebswelle in der Normalbetriebsposition des Wischers gewährleistet, wobei diese Vorrichtung durch ein an den Arm angelegtes Drehmoment, das größer als das von der Welle ausgeübte ist, verformbar ist und durch relative Sperrpositionierung des Arms und der Antriebswelle in die Normalbetriebsposition zurückstellbar ist, wobei es nur eine relative Sperrpositionierung des Arms (1, 3) und der Antriebswelle gibt, **dadurch gekennzeichnet, dass** die verformbare Vorrichtung mindestens ein elastisches Blatt (6A, 6B, 6C) umfasst, von dem mindestens ein Ende mit dem Arm (2, 3) fest verbunden ist und von dem ein Sperrteil (6D) in einem mit der Antriebswelle fest verbundenen Anschlagteil (7A) in Eingriff steht.

2. Anordnung nach dem vorhergehenden Anspruch, **dadurch gekennzeichnet, dass** der Anschlagteil (7A) an einer mit der Antriebswelle fest verbundenen Hülse (7) angeordnet ist.

3. Anordnung nach Anspruch 1 oder 2, **dadurch gekennzeichnet, dass** das elastische Blatt (6A, 6B, 6C) durch seine beiden Enden mit dem Arm fest verbunden ist und der Sperrteil (6D) ein in V-Form gebogener Teil ist.

4. Anordnung nach einem der Ansprüche 1 bis 3, **dadurch gekennzeichnet, dass** das elastische Blatt ein metallisches Federblatt ist.

5. Wischer, der mit einer Anordnung nach einem der vorhergehenden Ansprüche ausgestattet ist, **dadurch gekennzeichnet, dass** die verformbare Vorrichtung in einem Kopf des Arms (3) untergebracht ist, der auf der Antriebswelle befestigt ist und an dem der Arm selbst (2) angelenkt ist, um in einer zur Scheibe im Wesentlichen senkrechten Ebene geschwenkt werden zu können.

## Claims

1. Arrangement for the disengageable connection of a windscreen wiper arm to a drive shaft rotated about its longitudinal axis (5), comprising a device secured to the arm and providing the connection of the arm (3, 4) and of the drive shaft in the normal operating position of the windscreen wiper, this device being deformable under the effect of a torque applied to the arm which is greater than that exerted by said shaft, and repositionable into the normal operating position by locked relative positioning of the arm and of the drive shaft, in which said locked relative positioning of the arm (1, 3) and of the drive shaft is unique, **characterized in that** said deformable device comprises at least one elastic blade (6A, 6B, 6C) of which at least one end is secured to the arm (2, 3) and of which a locking part (6D) is fitted into a stop part (7A) secured to the drive shaft.

2. Arrangement according to the preceding claim, **characterized in that** said stop part (7A) is arranged on a sleeve (7) secured to the drive shaft.

3. Arrangement according to Claim 1 or 2, **characterized in that** said elastic blade (6A, 6B, 6C) is secured to the arm by its two ends and said locking part (6D) is a V-shaped folded part.

4. Arrangement according to one of Claims 1 to 3, **characterized in that** said elastic blade is a metallic spring leaf.

5. Windscreen wiper equipped with an arrangement according to one of the preceding claims, **characterized in that** said deformable device is housed in an arm head (3), mounted on the drive shaft and on which the arm (2) is articulated in itself, in order to be able to be pivoted in a plane substantially perpendicular to the windscreen.
